# EUROPEAN PATENT APPLICATION

(11) **EP 3 640 222 A1**
(43) Date of publication of application: **22.04.2020**
(21) Application number: 18816712.6
(22) Date of filing: 10.04.2018
(51) Int. Cl.: C03C 3/16, G02B 1/00

(54) **OPTICAL GLASS, PREFORM, AND OPTICAL ELEMENT**

(30) Priority: 16.06.2017 JP 2017118859; 28.02.2018 JP 2018034031
(71) Applicant: Ohara Inc., Chuo-ku Sagamihara-shi Kanagawa 252-5286 (JP)
(72) Inventor: IWASAKI Nana, Sagamihara-Shi Kanagawa 252-5286 (JP)
(74) Representative: SSM Sandmair
(86) International application number: PCT/JP2018/015070
(87) International publication number: WO 2018/230124

(57) **Abstract**

There are provided an optical glass that has a low temperature coefficient of relative refractive index and that can contribute to correction of the influence on image formation characteristics due to temperature change, and a preform and an optical element that use the optical glass.

The optical glass contains, on a mass% basis, 20.0% to 40.0% of a P₂O₅ component, 25.0% to 50.0% of a Nb₂O₅ component, and 3.0% to 30.0% of a total mass (Na₂O + K₂O), wherein a temperature coefficient (40°C to 60°C) of a relative refractive index (589.29 nm) is in the range of +3.0 × 10⁻⁶ to -10.0 × 10⁻⁶ (°C⁻¹).

## Description

### Technical Field

The present invention relates to an optical glass, a preform, and an optical element.

### Background Art

In recent years, optical elements incorporated into onboard optical apparatuses such as onboard cameras and optical elements incorporated into optical apparatuses that generate a large amount of heat, such as projectors, copying machines, laser printers, and broadcasting equipment have been increasingly used in a higher-temperature environment. In such a high-temperature environment, the service temperature of optical elements constituting an optical system tends to considerably change, and the temperature often reaches 100°C or higher. At this time, a large adverse effect on the image formation characteristics and the like of the optical system due to temperature change cannot be ignored. Therefore, an optical system whose image formation characteristics and the like are not easily adversely affected by temperature change has been demanded.

To provide an optical system whose image formation characteristics and the like are not easily adversely affected by temperature change, an optical element formed of a glass in which the refractive index decreases with increasing the temperature and which has a negative temperature coefficient of relative refractive index and an optical element formed of a glass in which the refractive index increases with increasing the temperature and which has a positive temperature coefficient of relative refractive index are preferably used in combination because the influence on the image formation characteristics and the like due to temperature change can be corrected.

A glass composition such as a glass composition disclosed in PTL 1 has been known as a glass developed focusing on the temperature coefficient of relative refractive index.

### Citation List

### Patent Literature

PTL 1: Japanese Unexamined Patent Application Publication No. 2007-106611

### Summary of Invention

### Technical Problem

The glass described in PTL 1 contains a large amount of component that contributes to high refractive index and is used in order to increase the temperature coefficient of relative refractive index. On the other hand, there is no glass that contains a large amount of component contributing to high refractive index and that has a low temperature coefficient of relative refractive index. However, a glass having a negative temperature coefficient of relative refractive index and a glass having a small absolute value of a temperature coefficient of relative refractive index are also desired from the viewpoint of contributing to correction of the influence on image formation characteristics due to temperature change.

In addition, a low refractive index-low dispersion glass material and a high refractive index-high dispersion glass material are sometimes joined to each other in optical design. The glass materials are joined well when the difference in average linear thermal expansion coefficient between the combined glass materials is small. In particular, a low refractive index-low dispersion glass material containing fluorine is known to have a high average linear thermal expansion coefficient, but a glass material having a high average linear thermal expansion coefficient is substantially not present among high refractive index-high dispersion glass materials. Therefore, a glass material having a high average linear thermal expansion coefficient has been demanded. The glass described in PTL 1 has a low average linear thermal expansion coefficient, which does not sufficiently meet such a requirement.

Furthermore, the optical glass in the present invention can be produced at lower cost because a glass having a high visible transmittance can be obtained without performing a step of removing the color of glass through reheat treatment.

In view of the foregoing, it is an object of the present invention to provide an optical glass that has a low temperature coefficient of relative refractive index and can contribute to correction of the influence on image formation characteristics due to temperature change, and a preform and an optical element that use an optical glass having an average linear thermal expansion coefficient suitable for joining to low refractive index-low dispersion glass materials.

### Solution to Problem

As a result of thorough studies to solve the above problem, the present inventors have found that an inexpensive glass having a low temperature coefficient of relative refractive index is obtained when the glass contains a P₂O₅ component and a Nb₂O₅ component and contains a Na₂O component and a K₂O component in a particular amount. Thus, they have completed the present invention. Specifically, the present invention provides the following.
(1) An optical glass contains, on a mass% basis, 20.0% to 40.0% of a P₂O₅ component, 25.0% to 50.0% of a Nb₂O₅ component, and 3.0% to 30.0% of a total mass (Na₂O + K₂O), wherein a temperature coefficient (40°C to 60°C) of a relative refractive index (589.29 nm) is in the range of +3.0 × 10⁻⁶ to -10.0 × 10⁻⁶ (°C⁻¹).
(2) The optical glass according to (1) contains 10.0% to 35.0% of a total mass (Na₂O + K₂O + BaO).
(3) In the optical glass according to (1) or (2), an average linear thermal expansion coefficient α at 100°C to 300°C is 80 (10⁻⁷ °C⁻¹) or more.
(4) The optical glass according to any one of (1) to (3) has a refractive index (n_{d}) of 1.65 or more and 2.00 or less and an Abbe number (ν_{d}) of 10 or more and 35 or less.
(5) A preform is formed of the optical glass according to any one of (1) to (4).
(6) An optical element is formed of the optical glass according to any one of (1) to (4).
(7) An optical apparatus includes the optical element according to (6).

### Advantageous Effects of Invention

The present invention can provide, at lower cost, an optical glass that has a low temperature coefficient of relative refractive index, can contribute to correction of the influence on image formation characteristics due to temperature change, and has a high visible transmittance, and a preform and an optical element that use the optical glass.

### Description of Embodiments

An optical glass according to the present invention contains, on a mass% basis, 20.0% or more and 40.0% or less of a P₂O₅ component, 25.0% or more and 50.0% or less in total of a Nb₂O₅ component, and 3.0% or more and 30.0% or less of a Na₂O component and a K₂O component in terms of total mass. The temperature coefficient (40°C to 60°C) of a relative refractive index (589.29 nm) is in the range of +3.0 × 10⁻⁶ to -10.0 × 10⁻⁶ (°C⁻¹).

When a Na₂O component and a K₂O component are contained in a large amount, a glass having a low temperature coefficient of relative refractive index and a high average linear thermal expansion coefficient can be provided.

Thus, there can be provided, at lower cost, an optical glass that has a high visible transmittance, has a low temperature coefficient of relative refractive index, can contribute to correction of the influence on image formation characteristics due to temperature change, is joined well to a low refractive index-low dispersion glass material, and has a high visible transmittance, and a preform and an optical element that use the optical glass.

Hereafter, an optical glass according to an embodiment of the present invention will be described in detail. The present invention is not limited to the following embodiment, and any modification can be appropriately made without departing from the scope of the present invention. Note that redundant description may be appropriately omitted, but this does not limit the spirit of the invention.

### [Glass component]

The compositional range of each of components constituting the optical glass according to the present invention will be described below. In this specification, the content of each of components is expressed in units of mass% relative to the total mass of the components in a composition in terms of oxides unless otherwise specified. Herein, the "composition in terms of oxides" refers to a composition in which when oxides, composite salts, metal fluorides, and the like used as raw materials for the components constituting the glass according to the present invention are all assumed to be decomposed and converted into oxides during melting, each component contained in the glass is expressed on the assumption that the total mass number of the produced oxides is 100 mass%.

### <Essential component and Optional component>

The P₂O₅ component is an essential component as a glass-forming oxide. In particular, when the content of the P₂O₅ component is 20.0% or more, the viscosity of molten glass is improved, which improves the stability of glass. The devitrification properties during reheat pressing are improved. Therefore, the content of the P₂O₅ component is preferably 20.0% or more, more preferably more than 21.0%, and further preferably more than 22.0%.

On the other hand, when the content of the P₂O₅ component is 40.0% or less, a desired refractive index and desired dispersion can be maintained. Therefore, the content of the P₂O₅ component is preferably 40.0% or less, more preferably 35.0% or less, and further preferably less than 30.0%.

For the P₂O₅ component, for example, Al(PO₃)₃, Ca(PO₃)₂, Ba(PO₃)₂, BPO₄, H₃PO₄, NaH₂PO₄, and KH₂PO₄ can be used as raw materials.

The Nb₂O₅ component is an essential component as a high refractive index-high dispersion component. In particular, when the content of the Nb₂O₅ component is 25.0% or more, the stability of glass can be improved while a high refractive index and high dispersion are maintained. Therefore, the content of the Nb₂O₅ component is preferably 25.0% or more, more preferably more than 28.0%, and further preferably more than 30.0%.

On the other hand, when the content of the Nb₂O₅ component is 50.0% or less, a high average linear thermal expansion coefficient is achieved and a desired refractive index and desired dispersion can be maintained. Therefore, the content of the Nb₂O₅ component is preferably 50.0% or less and more preferably 47.0% or less.

For the Nb₂O₅ component, for example, Nb₂O₅ can be used as a raw material.

The Na₂O component is an optional component that, when the content of the Na₂O component is more than 0%, can improve the melting properties of glass raw materials, can improve the transmittance, and can decrease the temperature coefficient of relative refractive index. Therefore, the content of the Na₂O component is preferably more than 0%, more preferably more than 0.1%, more preferably more than 0.5%, more preferably more than 1.0%, more preferably more than 1.5%, and more preferably more than 2.0%.

In particular, when the content of the Na₂O component is more than 10.0%, the temperature coefficient of relative refractive index is decreased and good melting properties of glass are achieved. Therefore, the content may be more than 10.0%.

On the other hand, when the content of the Na₂O component is 35.0% or less, the decrease in refractive index of glass due to an excessively high content of the Na₂O component, the decrease in chemical resistance (water resistance), and the devitrification can be suppressed, and also the devitrification during reheat pressing can be suppressed. Therefore, the content of the Na₂O component is preferably 35.0% or less, more preferably less than 30.0%, more preferably less than 25.0%, and more preferably less than 20.0%.

For the Na₂O component, for example, Na₂CO₃, NaNO₃, NaF, and Na₂SiF₆ can be used as raw materials.

The K₂O component is an optional component that, when the content of the K₂O component is more than 0%, can increase the average linear thermal expansion coefficient, can improve the transmittance, and can decrease the temperature coefficient of relative refractive index. Therefore, the content of the K₂O component is preferably more than 0%, more preferably 0.5% or more, more preferably more than 1.0%, and more preferably more than 2.0%.

In particular, when the content of the K₂O component is more than 5.0%, the temperature coefficient of relative refractive index is decreased and the stability of glass is improved. Therefore, the content may be more than 5.0%.

On the other hand, when the content of the K₂O component is 30.0% or less, the stability of glass is maintained and the decrease in refractive index is suppressed. Therefore, the content of the K₂O component is preferably 30.0% or less, more preferably less than 25.0%, more preferably less than 20.0%, and more preferably less than 15.0%.

For the K₂O component, for example, K₂CO₃, KNO₃, KF, KHF₂, and K₂SiF₆ can be used.

The BaO component is an optional component that, when the content of the BaO component is more than 0%, can improve the melting properties of glass raw materials, can suppress the devitrification of glass, can increase the refractive index, and can decrease the temperature coefficient of relative refractive index. Among components that contribute to high refractive index, the BaO component is a low-cost component that is easily melted. Therefore, the content of the BaO component is preferably more than 0%, more preferably more than 0.1%, more preferably more than 1.0%, and more preferably more than 2.0%.

On the other hand, when the content of the BaO component is 20.0% or less, the average linear thermal expansion coefficient can be increased and the decrease in refractive index of glass due to an excessively high content of the BaO component and the devitrification can be suppressed. Therefore, the content of the BaO component is preferably 20.0% or less, more preferably less than 19.0%, and further preferably less than 18.0%.

For the BaO component, for example, BaCO₃, Ba(NO₃)₂, Ba(PO₃)₂, and BaF₂ can be used as raw materials.

The TiO₂ component is a component that, when the content of the TiO₂ component is more than 0%, can increase the refractive index of glass, can decrease the Abbe number, and can contribute to easily obtaining a stable glass. Therefore, the content of the TiO₂ component may be preferably more than 0%, more preferably more than 1.0%, more preferably more than 3.0%, and more preferably 5.0% or more.

On the other hand, when the content of the TiO₂ component is 30.0% or less, the average linear thermal expansion coefficient can be increased, the temperature coefficient of relative refractive index can be decreased, the devitrification due to an excessively high content of the TiO₂ component can be suppressed, and the decrease in transmittance of visible light (in particular, with a wavelength of 500 nm or less) through glass can be suppressed. Therefore, the content of the TiO₂ component may be preferably 30.0% or less, more preferably less than 26.0%, more preferably less than 23.0%, and more preferably less than 20.0%.

For the TiO₂ component, for example, TiO₂ can be used as a raw material.

The SiO₂ component is a glass-forming oxide component that, when the content of the SiO₂ component is more than 0%, can improve the viscosity of molten glass. Therefore, the content of the SiO₂ component is preferably more than 0%, more preferably more than 0.1%, and further preferably more than 0.3%.

On the other hand, when the content of the SiO₂ component is 5.0% or less, the increase in glass transition temperature and the decrease in refractive index are suppressed. Therefore, the content of the SiO₂ component is preferably 5.0% or less, more preferably 3.0% or less, and further preferably less than 1.0%.

For the SiO₂ component, for example, SiO₂, K₂SiF₆, and Na₂SiF₆ can be used as raw materials.

The B₂O₃ component is a component that is optionally used as a glass-forming oxide and that, when the content of the B₂O₃ component is more than 0%, can improve the melting properties of glass.

On the other hand, when the content of the B₂O₃ component is 5.0% or less, the temperature coefficient of relative refractive index can be decreased and the deterioration of chemical resistance and the deterioration of devitrification properties during reheat pressing can be suppressed. Therefore, the content of the B₂O₃ component is preferably 5.0% or less, more preferably 3.0% or less, more preferably less than 1.5%, and more preferably less than 1.3%.

The WO₃ component is an optional component that, when the content of the WO₃ component is more than 0%, can suppress the coloration of glass caused by other components that contribute to high refractive index, can increase the refractive index, can decrease the Abbe number, can decrease the glass transition temperature, and can suppress the devitrification.

On the other hand, when the content of the WO₃ component is 10.0% or less, the temperature coefficient of relative refractive index can be decreased and the devitrification during reheat pressing can be suppressed. Furthermore, the visible transmittance can be improved by suppressing the coloration of glass caused by the WO₃ component. Therefore, the content of the WO₃ component is preferably 10.0% or less, more preferably less than 9.0%, more preferably less than 8.0%, more preferably less than 6.5%, and more preferably less than 5.0%.

For the WO₃ component, for example, WO₃ can be used as a raw material.

The ZnO component is an optional component that, when the content of the ZnO component is more than 0%, can increase the solubility of raw materials, can facilitate defoaming from molten glass, and can improve the stability of glass. The ZnO component is also a component that can decrease the glass transition temperature and can improve the chemical resistance.

On the other hand, when the content of the ZnO component is less than 5.0%, the temperature coefficient of relative refractive index can be decreased, the expansion due to heat can be suppressed, the decrease in refractive index can be suppressed, and the devitrification due to an excessive decrease in viscosity can be suppressed. Therefore, the content of the ZnO component may be preferably less than 5.0%, more preferably less than 4.0%, more preferably less than 2.0%, more preferably less than 1.0%, and more preferably less than 0.5%. The ZnO component is not necessarily contained.

For the ZnO component, for example, ZnO and ZnF₂ can be used as raw materials.

The ZrO₂ component is an optional component that, when the content of the ZrO₂ component is more than 0%, can increase the refractive index of glass and can suppress the devitrification. Therefore, the content of the ZrO₂ component may be preferably more than 0%, more preferably more than 0.5%, and further preferably more than 1.0%.

On the other hand, when the content of the ZrO₂ component is 5.0% or less, the temperature coefficient of relative refractive index can be decreased and the devitrification due to an excessively high content of the ZrO₂ component can be suppressed. Therefore, the content of the ZrO₂ component is preferably 5.0% or less, more preferably 3.0% or less, more preferably less than 1.0%, and more preferably less than 0.5%. The ZrO₂ component is not necessarily contained.

For the ZrO₂ component, for example, ZrO₂ and ZrF₄ can be used as raw materials.

The MgO component, the CaO component, and the SrO component are optional components that, when the content of each of the components is more than 0%, can control the refractive index, the melting properties, and the devitrification resistance of glass.

On the other hand, when the content of each of the MgO component, the CaO component, and the SrO component is 5.0% or less, the decrease in refractive index can be suppressed and the devitrification due to an excessively high content of such a component can be suppressed. Therefore, the content of each of the MgO component, the CaO component, and the SrO component is preferably 5.0% or less, more preferably 3.5% or less, and further preferably less than 2.0%.

The Li₂O component is an optional component that can improve the melting properties of glass and can decrease the glass transition temperature.

On the other hand, when the content of the Li₂O component is decreased, the decrease in the refractive index of glass can be suppressed, and the devitrification of glass and the devitrification during reheat pressing can be suppressed. Therefore, the content of the Li₂O component is preferably 5.0% or less, more preferably less than 3.0%, more preferably 1.0% or less, and more preferably less than 0.5%.

For the Li₂O component, for example, Li₂CO₃, LiNO₃, and LiF can be used as raw materials.

The Al₂O₃ component and the Ga₂O₃ component are optional components that, when the content of each of the components is more than 0%, can improve the devitrification resistance of molten glass.

On the other hand, when the content of each of the Al₂O₃ component and the Ga₂O₃ component is 10.0% or less, the liquid-phase temperature of glass is decreased to improve the devitrification resistance. Therefore, the content of each of the Al₂O₃ component and the Ga₂O₃ component is preferably 10.0% or less, more preferably less than 5.0%, more preferably less than 3.0%, and more preferably less than 1.0%.

For the Al₂O₃ component, for example, Al₂O₃, Al(OH)₃, and AlF₃ can be used as raw materials. For the Ga₂O₃ component, for example, Ga₂O₃ can be used as a raw material.

The Sb₂O₃ component is an optional component that, when the content of the Sb₂O₃ component is more than 0%, can defoam molten glass.

On the other hand, when the content of the Sb₂O₃ component is 1.0% or less, the decrease in transmittance in a short-wavelength range of the visible region, the solarization of glass, and the deterioration of internal quality are suppressed. Therefore, the content of the Sb₂O₃ component may be preferably 1.0% or less, more preferably less than 0.5%, more preferably less than 0.2%, and more preferably less than 0.1%.

For the Sb₂O₃ component, for example, Sb₂O₃, Sb₂O₅, and Na₂H₂Sb₂O₇·5H₂O can be used as raw materials.

The total content of the Na₂O component and the K₂O component is preferably 3.0% or more. This can readily provide a glass having a low temperature coefficient of relative refractive index, a high average linear thermal expansion coefficient, and a high transmittance. Therefore, the total mass (Na₂O + K₂O) is preferably 3.0% or more, more preferably more than 4.0%, more preferably more than 5.0%, and more preferably more than 6.0%.

On the other hand, when the total content is 30.0% or less, the deterioration of chemical resistance and the decrease in refractive index of glass due to an excessively high content of the components are suppressed. Therefore, the total mass (Na₂O + K₂O) is preferably 30.0% or less, more preferably less than 25.0%, and further preferably less than 23.0%.

The total content of the Na₂O component, the K₂O component, and the BaO component is preferably 10.0% or more. This can readily provide a glass having a low temperature coefficient of relative refractive index.

Therefore, the total mass (Na₂O + K₂O + BaO) is preferably 10.0% or more, more preferably more than 12.0%, more preferably more than 14.0%, more preferably 16.0% or more, and more preferably more than 17.5%.

On the other hand, when the total content of the components is less than 35.0%, the deterioration of the chemical resistance, the decrease in refractive index of glass due to an excessively high content of the components, and the deterioration of devitrification properties during reheat pressing are suppressed. Therefore, the total mass (Na₂O + K₂O + BaO) is preferably 35.0%, more preferably 33.0% or less, and further preferably less than 30.0%.

The total content of the Nb₂O₅ component and the TiO₂ component is preferably 30.0% or more. This can decrease the temperature coefficient of relative refractive index while maintaining a high refractive index.

Therefore, the total mass (Nb₂O₅ + TiO₂) is preferably 30.0% or more, more preferably 35.0% or more, and further preferably 40.0% or more.

On the other hand, when the total mass (Nb₂O₅ + TiO₂) is 65.0% or less, the liquid-phase temperature can be decreased to obtain a stable glass. Therefore, the total mass (Nb₂O₅ + TiO₂) is preferably 65.0% or less, more preferably 63.0% or less, and further preferably 60.0 or less.

The ratio of the total content of the Na₂O component, the K₂O component, and the BaO component to the total content of the B₂O₃ component and the TiO₂ component is preferably more than 0.5. This can decrease the temperature coefficient of relative refractive index and can increase the average linear thermal expansion coefficient. Therefore, the mass ratio (Na₂O + K₂O + BaO)/(B₂O₃ + TiO₂) is preferably more than 0.5, more preferably more than 0.7, and further preferably more than 1.0.

On the other hand, when the mass ratio (Na₂O + K₂O + BaO)/(B₂O₃ + TiO₂) is less than 5.5, a glass subjected to good reheat pressing can be obtained while a desired refractive index and a desired transmittance are maintained. Therefore, the mass ratio (Na₂O + K₂O + BaO) / (B₂O₃ + TiO₂) is preferably less than 5.5, more preferably less than 5.0, and further preferably less than 4.8.

When the total content (total mass) of RO components (in the formula, R represents at least one selected from the group consisting of Mg, Ca, Sr, and Ba) is more than 0%, the RO components can increase the refractive index of glass and can improve the melting properties and the devitrification resistance. Therefore, the lower limit of the total content (total mass) of the RO components is preferably more than 0%, more preferably more than 0.5%, and further preferably more than 1.0%. On the other hand, when the total content of the RO components is 30.0% or less, the average linear thermal expansion coefficient can be increased, and the decrease in refractive index of glass due to an excessively high content of the components and the devitrification can be suppressed. Therefore, the upper limit of the total content (total mass) of the RO components is preferably 30.0% or less, more preferably 25.0% or less, and further preferably 20.0% or less.

The La₂O₃ component, the Gd₂O₃ component, the Y₂O₃ component, the Yb₂O₃ component, and the Ta₂O₅ component are optional components that, when the content of each of the components is more than 0%, can increase the refractive index of glass and can improve the devitrification resistance.

On the other hand, when the content of each of the La₂O₃ component, the Gd₂O₃ component, the Y₂O₃ component, the Yb₂O₃ component, and the Ta₂O₅ component is 5.0% or less, the raw material cost of an optical glass can be reduced and the temperature at which raw materials are melted is decreased to reduce the energy required for melting the raw materials. Thus, the production cost of an optical glass can be reduced. Therefore, the content of each of the components may be preferably 5.0% or less, more preferably less than 3.0%, more preferably less than 2.0%, and more preferably less than 1.0%.

The GeO₂ component is an optional component that, when the content of the GeO₂ component is more than 0%, can increase the refractive index of glass and can improve the devitrification resistance.

However, GeO₂ has a high raw material cost. If the content of GeO₂ is high, the production cost increases. Therefore, the content of the GeO₂ component may be preferably 10.0% or less, more preferably less than 5.0%, more preferably less than 3.0%, and more preferably less than 1.0%.

For the GeO₂ component, for example, GeO₂ can be used as a raw material.

The Bi₂O₃ component is an optional component that, when the content of the Bi₂O₃ component is more than 0%, can increase the refractive index, can decrease the Abbe number, and can decrease the glass transition temperature.

On the other hand, when the content of the Bi₂O₃ component is 5.0% or less, the liquid-phase temperature of glass is decreased and the devitrification resistance is improved. Therefore, the content of the Bi₂O₃ component may be preferably 5.0% or less, more preferably less than 3.0%, and further preferably less than 1.0%. In particular, the Bi₂O₃ component is preferably not contained from the viewpoint of obtaining a glass having a high transmittance.

For the Bi₂O₃ component, for example, Bi₂O₃ can be used as a raw material.

The TeO₂ component is an optional component that, when the content of the TeO₂ component is more than 0%, can increase the refractive index and can decrease the glass transition temperature.

On the other hand, TeO₂ may form an alloy with platinum when glass raw materials are melted in a platinum crucible or in a melting chamber whose portion in contact with molten glass is formed of platinum. Therefore, the content of the TeO₂ component may be preferably 10.0% or less, more preferably less than 5.0%, more preferably less than 3.0%, and more preferably less than 1.0%.

For the TeO₂ component, for example, TeO₂ can be used as a raw material.

The SnO₂ component is an optional component that, when the content of the SnO₂ component is more than 0%, can suppress oxidation of molten glass for glass fining and can increase the transmittance of visible light through the glass.

On the other hand, when the content of the SnO₂ component is 3.0% or less, the coloration of glass due to reduction of molten glass and the devitrification of glass can be suppressed. Furthermore, alloy formation between the SnO₂ component and melting equipment (in particular, a noble metal such as Pt) is suppressed, which increases the life of the melting equipment. Therefore, the content of the SnO₂ component may be preferably 3.0% or less, more preferably less than 1.0%, more preferably less than 0.5%, and more preferably less than 0.1%.

For the SnO₂ component, for example, SnO, SnO₂, SnF₂, and SnF₄ can be used as raw materials.

The components for glass fining and defoaming are not limited to the above-described Sb₂O₃ component and the SnO₂ component. A publicly known fining agent and defoaming agent in the field of glass production may be used alone or in combination.

The F component is an optional component that, when the content of the F component is more than 0%, can increase the Abbe number of glass, can decrease the glass transition temperature, and can improve the devitrification resistance.

However, if the content of the F component is more than 10.0%, that is, if the total amount of fluorides with which a part or the whole of one or more of the above-described oxides of metal elements are replaced is more than 10.0% in terms of F, the amount of F component volatilized is increased, which makes it difficult to achieve stable optical constants and thus makes it difficult to obtain a homogeneous glass. Furthermore, the F component unnecessarily increases the Abbe number.

Therefore, the content of the F component may be preferably 10.0% or less, more preferably less than 5.0%, more preferably less than 3.0%, and more preferably less than 1.0%.

The F component can be incorporated into the glass by using, for example, ZrF₄, AlF₃, NaF, and CaF₂ as raw materials.

The ratio of the total content of the SiO₂ component, the Al₂O₃ component, and the ZnO component to the total content of the B₂O₃ component and the Rn₂O component (in the formula, Rn represents at least one selected from the group consisting of Li, Na, and K) is preferably 15.0 or less. By decreasing the ratio, the deterioration of the melting properties can be suppressed.

Therefore, the mass ratio (SiO₂ + Al₂O₃ + Zn0)/(B₂O₃ + Rn₂O) is preferably 15.0 or less, more preferably 12.0 or less, more preferably 10.0 or less, more preferably 8.0 or less, more preferably 6.0 or less, and more preferably less than 5.0.

On the other hand, the mass ratio (SiO₂ + Al₂O₃ + ZnO)/(B₂O₃ + Rn₂O) may be more than 0. This can decrease the temperature coefficient of relative refractive index and can increase the average linear thermal expansion coefficient. Therefore, the mass ratio (SiO₂ + Al₂O₃ + ZnO)/(B₂O₃ + Rn₂O) is preferably more than 0, more preferably more than 1.0, and further preferably more than 2.0.

When the total content (total mass) of Rn₂O components (in the formula, Rn represents at least one selected from the group consisting of Li, Na, and K) is more than 1.0%, the temperature coefficient of relative refractive index can be decreased and the average linear thermal expansion coefficient can be increased. Therefore, the total content (total mass) of the Rn₂O components is preferably more than 1.0%, more preferably more than 1.5%, and further preferably more than 2.0%.

On the other hand, when the total content is 30.0% or less, the devitrification due to a decrease in viscosity of glass can be suppressed while a desired refractive index and desired dispersion are maintained. Therefore, the total content (total mass) of the Rn₂O components is preferably 30.0% or less, more preferably less than 25.0%, and further preferably less than 23.0%.

The optical glass according to the present invention preferably contains two or more of the Rn₂O components described above. This decreases the temperature coefficient of relative refractive index, and a step of performing reheat treatment to achieve a high transmittance is not required. In particular, the optical glass preferably contains, as the Rn₂O components, two or more components including the Na₂O component and the K₂O component because the average linear thermal expansion coefficient can be increased, the transmittance can be improved, and the temperature coefficient of relative refractive index can be decreased.

The total content (total mass) of Ln₂O₃ components (in the formula, Ln represents at least one selected from the group consisting of La, Gd, Y, Yb, and Lu) is preferably 5.0% or less.

This can provide a glass having high devitrification resistance and high transmittance. Therefore, the total content (total mass) of the Ln₂O₃ components is preferably 5.0% or less, more preferably 3.5% or less, and further preferably less than 2.0%.

### <Components that should not be contained>

Next, components that should not be contained in the optical glass according to the present invention and components that are not preferably contained in the optical glass will be described.

Other components may be optionally added as long as the characteristics of the glass according to the present invention are not impaired. However, if transition metal components other than Ti, Zr, Nb, W, La, Gd, Y, Yb, and Lu, such as V, Cr, Mn, Fe, Co, Ni, Cu, Ag, and Mo, are contained alone or in combination in a small amount, the glass is colored and absorbs light having a particular wavelength in the visible range. Therefore, it is preferable that, in particular, an optical glass that uses light having a wavelength in the visible range substantially do not contain the above transition metal components.

Since lead compounds such as PbO and arsenic compounds such as As₂O₃ are components with a high environmental load, it is desirable that such compounds be substantially not contained, that is, no such compounds be contained at all except for unavoidable mixing.

Furthermore, in recent years, components of Th, Cd, Tl, Os, Be, and Se tend to be not used because they are hazardous chemical substances. Measures for environmental protection need to be taken not only in the glass production process, but also in the working process and in the disposal after commercialization. Therefore, when an importance is given to the influence on environment, it is preferable that the above components be substantially not contained.

### [Production method]

The optical glass according to the present invention is produced by, for example, the following method. That is, high-purity raw materials used for typical optical glasses and serving as raw materials for the above components, such as oxides, hydroxides, carbonates, nitrates, fluorides, hydroxides, and metaphosphate compounds are uniformly mixed with each other so that each component has a predetermined content. The resulting mixture is inserted into a platinum crucible, melted in an electric furnace in the temperature range of 1000°C to 1500°C for 1 to 10 hours in accordance with the degree of difficulty in melting of the glass raw materials, and stirred for homogenization. Then, the temperature is decreased to an appropriate temperature and the resulting product is poured into a mold and slowly cooled.

### <Physical properties>

The optical glass according to the present invention preferably has a high refractive index and a low Abbe number (high dispersion).

In particular, the refractive index (n_{d}) of the optical glass according to the present invention is preferably 1.65 or more, more preferably 1.67 or more, and further preferably 1.69 or more. The refractive index (n_{d}) may be preferably 2.00 or less, more preferably 1.98 or less, more preferably 1.96 or less, and more preferably 1.95 or less.

The Abbe number (*v*_{d}) of the optical glass according to the present invention is preferably 10.0 or more, more preferably 13.0 or more, more preferably 15.0 or more, and more preferably 17.0 or more. The Abbe number (*v*_{d}) may be preferably 35.0 or less, more preferably 34.0 or less, more preferably 32.0 or less, and more preferably 30.0 or less.

When the optical glass has such a high refractive index, a large amount of refraction of light can be achieved even if the thickness of the optical element is decreased. By achieving such high dispersion, the focal point can be appropriately shifted in accordance with the wavelength of light when the optical glass is used as a single lens. Therefore, for example, when an optical system is made by combining the optical glass with an optical element having low dispersion (high Abbe number), the aberration in the entire optical system can be reduced to achieve good image formation characteristics and the like.

As described above, the optical glass according to the present invention is useful in terms of optical design. In particular, when an optical system is made, the optical system can be downsized while good image formation characteristics and the like are achieved, which can extend the flexibility in optical design.

The optical glass according to the present invention has a low temperature coefficient (dn/dT) of relative refractive index.

More specifically, in the optical glass according to the present invention, the upper limit of the temperature coefficient of relative refractive index is preferably +3.0 × 10⁻⁶ °C⁻¹, more preferably +1.5 × 10⁻⁶ °C⁻¹, and further preferably +1.0 × 10⁻⁶ °C⁻¹. The temperature coefficient is a value equal to the upper limit or a value lower than (negative side) the upper limit.

On the other hand, in the optical glass according to the present invention, the lower limit of the temperature coefficient of relative refractive index is preferably -10.0 × 10⁻⁶ °C⁻¹, more preferably -8.0 × 10⁻⁶ °C⁻¹, and further preferably -7.0 × 10⁻⁶ °C⁻¹. The temperature coefficient is a value equal to the lower limit or a value higher than (positive side) the lower limit.

Among glasses having a refractive index (n_{d}) of 1.65 or more and an Abbe number (*v*_{d}) of 10 or more and 35 or less, not many glasses having a low temperature coefficient of relative refractive index are present. Such glasses extend the range of choices for correction of, for example, image formation misalignment due to temperature change, and the correction can be easily performed. Therefore, a glass having a temperature coefficient of relative refractive index within the above range can contribute to the correction of, for example, image formation misalignment due to temperature change.

The temperature coefficient of relative refractive index of the optical glass according to the present invention is a temperature coefficient of a refractive index (589.29 nm) in the air at the same temperature as that of the optical glass. The temperature coefficient indicates the amount of change in relative refractive index per 1°C (°C⁻¹) obtained when the temperature is changed from 40°C to 60°C.

The optical glass according to the present invention preferably has an average linear thermal expansion coefficient α of 80 (10⁻⁷ °C⁻¹) or more at 100°C to 300°C. That is, the average linear thermal expansion coefficient α at 100°C to 300°C of the optical glass according to the present invention is preferably 80 (10⁻⁷ °C⁻¹) or more, more preferably 85 (10⁻⁷ °C⁻¹) or more, and further preferably 90 (10⁻⁷ °C⁻¹) or more.

In general, when a glass has a high average linear thermal expansion coefficient α, cracks are easily generated during working of the glass. Therefore, the average linear thermal expansion coefficient α is desirably low. On the other hand, from the viewpoint of performing joining in combination with a glass material having a low temperature coefficient of relative refractive index and a high average linear thermal expansion coefficient α, the average linear thermal expansion coefficient α of the glass is desirably equal to or close to that of the glass material.

Among glasses having a refractive index (n_{d}) of 1.65 or more and an Abbe number (*v*_{d}) of 10 or more and 35 or less, not many glass materials having a high average linear thermal expansion coefficient α are present. In the case of combined use with a low refractive index-low dispersion glass material, a glass material having a high average linear thermal expansion coefficient α as in the present invention is useful.

The optical glass according to the present invention preferably has a high visible transmittance, in particular, a high transmittance of visible light at shorter wavelengths, thereby undergoing less coloration.

In particular, when the optical glass according to the present invention is expressed in terms of the transmittance of glass, the shortest wavelength (λ₈₀) at which a sample having a thickness of 10 mm has a spectral transmittance of 80% is preferably 460 nm or less, more preferably 450 nm or less, and further preferably 440 nm or less.

In the optical glass according to the present invention, the shortest wavelength (λ₇₀) at which a sample having a thickness of 10 mm has a spectral transmittance of 70% is preferably 430 nm or less, more preferably 420 nm or less, and further preferably 410 nm or less.

In the optical glass according to the present invention, the shortest wavelength (λ₅) at which a sample having a thickness of 10 mm has a spectral transmittance of 5% is preferably 400 nm or less, more preferably 390 nm or less, and further preferably 380 nm or less.

Thus, the absorption edge of the glass is near an ultraviolet region, which increases the transparency of the glass for visible light. Therefore, the optical glass can be preferably used for light-transmitting optical elements such as lenses.

### [Preform and Optical element]

A glass formed body can be produced from the produced optical glass by using, for example, polishing means or mold press forming means such as reheat press forming or precision press forming. That is, such a glass formed body can be produced by performing machining such as grinding or polishing on the optical glass; by producing a preform for mold press forming from the optical glass, performing reheat press forming on the preform, and then performing polishing; or by performing precision press forming on a preform produced by polishing or a preform produced by publicly known float forming or the like. Note that the means for producing a glass formed body is not limited to the above means.

As described above, the optical glass according to the present invention is useful for various optical elements and optical designs. In particular, an optical element such as a lens or a prism is preferably produced by producing a preform from the optical glass according to the present invention and performing, for example, reheat press forming or precision press forming on the preform. This allows formation of a preform having a large diameter. Therefore, when the optical element is used for optical apparatuses, image formation characteristics and projection characteristics with high resolution and high precision can be achieved while the optical element is upsized.

The glass formed body made of the optical glass according to the present invention can be used for optical elements such as lenses, prisms, and mirrors and can be typically used for apparatuses that readily reach high temperature, such as onboard optical apparatuses, projectors, and copying machines.

### Examples

Tables 1 to 8 show the composition in each of Examples (No. 1 to No. 51) and Comparative Examples (Nos. A and B) of the present invention and the refractive index (n_{d}), the Abbe number (*v*_{d}), the temperature coefficient (dn/dT) of relative refractive index, the average linear thermal expansion coefficient (100°C to 300°C), and the transmittance (λ₈₀, λ₇₀, and λ₅) of the glasses. Note that Examples below are merely illustrative, and the present invention is not limited to only Examples below.

The glasses in Examples and Comparative Examples of the present invention were produced as follows. For each of the glasses, high-purity raw materials used for typical optical glasses, such as oxides, hydroxides, carbonates, nitrates, fluorides, and metaphosphate compounds, were selected as raw materials for the corresponding components. The raw materials were weighed so as to have a composition ratio in each of Examples in Tables, uniformly mixed with each other, and then inserted into a platinum crucible. The resulting mixture was melted in an electric furnace in the temperature range of 800°C to 1300°C for 1 to 10 hours in accordance with the degree of difficulty in melting of the glass raw materials, then stirred for homogenization, poured into a mold or the like, and slowly cooled.

The refractive index (n_{d}) and Abbe number (*v*_{d}) of the glass in each of Examples and Comparative Examples were values measured for the d-line (587.56 nm) of a helium lamp. The Abbe number (*v*_{d}) was calculated from Formula Abbe number (*v*_{d}) = [(n_{d} - 1)/(n_{F} - n_{C})] using the refractive index for the d-line, a refractive index (n_{F}) for the F-line (486.13 nm) of a hydrogen lamp, and a refractive index (n_{C}) for the Cline (656.27 nm).

The temperature coefficient (dn/dT) of relative refractive index of the glass in each of Examples and Comparative Examples was a temperature coefficient of relative refractive index at 40°C to 60°C measured for light having a wavelength of 589.29 nm by interferometry described in "Method for measuring temperature coefficient of refractive index of optical glass" of JOGIS18-2008, which is the standard of the Japan Optical Glass Manufacturers' Association.

The average linear thermal expansion coefficient (100°C-300°C) of the glass in each of Examples and Comparative Examples was determined from a thermal expansion curve obtained by measuring the relationship between temperature and elongation of sample in conformity with "Method for measuring thermal expansion of optical glass" of JOGIS08-2003, which is the standard of the Japan Optical Glass Manufacturers' Association.

The transmittance of the glass in each of Examples was measured in conformity with JOGIS02-2003, which is the standard of the Japan Optical Glass Manufacturers' Association. In the present invention, the presence or absence of coloration on the glass and the degree of coloration were determined by measuring the transmittance of the glass. Specifically, the spectral transmittance of a parallel face-polished product having a thickness of 10 ± 0.1 mm was measured at 200 to 800 nm in conformity with JIS Z8722 to determine λ₈₀ (wavelength at a transmittance of 80%), λ₇₀ (wavelength at a transmittance of 70%), and λ₅ (wavelength at a transmittance of 5%).

**[Table 1]**

| (Unit: mass%) | Example | | | | | | | |
|---|---|---|---|---|---|---|---|---|
| | 1 | 2 | 3 | 4 | 5 | 6 | 7 | 8 |
| P₂O₅ | 28.61 | 25.89 | 24.77 | 26.12 | 25.39 | 24.69 | 25.63 | 25.63 |
| Nb₂O₅ | 44.55 | 40.31 | 38.57 | 45.01 | 43.74 | 42.54 | 44.15 | 44.15 |
| Na₂O | 16.29 | 15.19 | 14.54 | 17.52 | 17.02 | 16.56 | 17.19 | 17.19 |
| K₂O | 4.12 | 3.73 | 3.57 | 4.43 | 4.31 | 4.19 | 4.35 | 4.35 |
| BaO | | | | | 2.82 | 2.74 | | |
| TiO₂ | 6.41 | 14.85 | 18.54 | 6.89 | 6.70 | 6.51 | 8.66 | 8.66 |
| SiO₂ | | | | | | | | |
| B₂O₃ | | | | | | | | |
| WO₃ | | | | | | | | |
| ZnO | | | | | | 2.74 | | |
| ZrO₂ | | | | | | | | |
| MgO | | | | | | | | |
| CaO | | | | | | | | |
| SrO | | | | | | | | |
| Li₂O | | | | | | | | |
| Al₂O₃ | | | | | | | | |
| Sb₂O₃ | 0.02 | 0.02 | 0.02 | 0.02 | 0.02 | 0.02 | 0.02 | 0.02 |
| Total | 100.00 | 100.00 | 100.00 | 100.00 | 100.00 | 100.00 | 100.00 | 100.00 |
| Na₂O+K₂O | 20.41 | 18.92 | 18.11 | 21.95 | 21.33 | 20.75 | 21.54 | 21.54 |
| Na₂O+K₂O+BaO | 20.41 | 18.92 | 18.11 | 21.95 | 24.15 | 23.49 | 21.54 | 21.54 |
| Nb₂O₅+TiO₂ | 50.96 | 55.16 | 57.11 | 51.9 | 50.44 | 49.05 | 52.81 | 52.81 |
| (Na₂O+K₂O+BaO)/(B₂O₃+TiO₂) | 3.18 | 1.27 | 0.98 | 3.19 | 3.60 | 3.61 | 2.49 | 2.49 |
| RO | 0.00 | 0.00 | 0.00 | 0.00 | 2.82 | 5.49 | 0.00 | 0.00 |
| Refractive index (n_{d}) | 1.70 | 1.83 | 1.86 | 1.78 | 1.78 | 1.78 | 1.79 | 1.77 |
| Abbe number (v_{d}) | 29.09 | 21.28 | 20.30 | 24.05 | 24.45 | 24.63 | 23.43 | 24.68 |
| λ₈₀ [nm] | 425 | 430 | 432 | 425 | 425 | 425 | 421 | 423 |
| λ₇₀ [nm] | 397 | 399 | 400 | 397 | 397 | 396 | 396 | 396 |
| λ₅ [nm] | 369 | 368 | 368 | 369 | 369 | 369 | 369 | 369 |
| α (100-300°C) [×10⁻⁷ °C⁻¹] | 141 | 123 | 118 | 137 | 147 | 137 | 134 | 143 |
| Temperature coefficient of relative refractive index [×10⁻⁶ °C⁻¹] | -5.64 | -3.21 | -2.58 | -5.11 | -6.44 | -5.11 | -4.71 | -5.91 |

**[Table 2]**

| (Unit: mass%) | Example | | | | | | | |
|---|---|---|---|---|---|---|---|---|
| | 9 | 10 | 11 | 12 | 13 | 14 | 15 | 16 |
| P₂O₅ | 25.63 | 25.63 | 25.63 | 27.91 | 25.12 | 23.16 | 22.15 | 23.16 |
| Nb₂O₅ | 44.15 | 44.15 | 44.15 | 38.83 | 37.01 | 38.60 | 36.93 | 38.60 |
| Na₂O | 17.19 | 17.19 | 17.19 | 3.83 | 17.52 | 13.00 | 16.78 | 3.91 |
| K₂O | 4.35 | 4.35 | 4.35 | 10.94 | 4.43 | 3.42 | 3.27 | 3.42 |
| BaO | | | | 12.53 | | 1.46 | 1.40 | 10.55 |
| TiO₂ | 6.76 | 6.76 | 6.76 | 5.95 | 14.89 | 15.44 | 14.77 | 15.44 |
| SiO₂ | | | | | | | | |
| B₂O₃ | | | | | 1.00 | | | |
| WO₃ | | | | | | 4.89 | 4.68 | 4.89 |
| ZnO | | | | | | | | |
| ZrO₂ | | | | | | | | |
| MgO | | 1.90 | | | | | | |
| CaO | 1.90 | | | | | | | |
| SrO | | | 1.90 | | | | | |
| Li₂O | | | | | | | | |
| Al₂O₃ | | | | | | | | |
| Sb₂O₃ | 0.02 | 0.02 | 0.02 | 0.02 | 0.02 | 0.02 | 0.02 | 0.02 |
| Total | 100.00 | 100.00 | 100.00 | 100.00 | 100.00 | 100.00 | 100.00 | 100.00 |
| Na₂O+K₂O | 21.54 | 21.54 | 21.54 | 14.76 | 21.95 | 16.42 | 20.05 | 7.33 |
| Na₂O+K₂O+BaO | 21.54 | 21.54 | 21.54 | 27.29 | 21.95 | 17.88 | 21.45 | 17.88 |
| Nb₂O₅+TiO₂ | 50.91 | 50.91 | 50.91 | 44.77 | 51.90 | 54.05 | 51.70 | 54.05 |
| (Na₂O+K₂O+BaO)/(B₂O₃+TiO₂) | 3.19 | 3.19 | 3.19 | 4.59 | 1.38 | 1.16 | 1.45 | 1.16 |
| RO | 1.90 | 1.90 | 1.90 | 12.53 | 0.00 | 1.46 | 1.40 | 10.55 |
| Refractive index (n_{d}) | 1.78 | 1.78 | 1.78 | 1.78 | 1.80 | 1.87 | 1.82 | 1.94 |
| Abbe number (v_{d}) | 24.62 | 24.48 | 24.38 | 25.17 | 22.56 | 20.18 | 21.98 | 18.80 |
| λ₈₀ [nm] | 424 | 425 | 426 | 430 | 432 | 432 | 433 | 434 |
| λ₇₀ [nm] | 396 | 397 | 397 | 399 | 400 | 400 | 400 | 400 |
| λ₅ [nm] | 369 | 369 | 369 | 373 | 370 | 368 | 368 | 368 |
| α(100-300°C) [×10⁻⁷ °C⁻¹] | 139 | 132 | 140 | 112 | 135 | 113 | 138 | 85 |
| Temperature coefficient of relative refractive index [×10⁻⁶ °C⁻¹] | -5.38 | -4.44 | -5.51 | -1.78 | -4.84 | -1.91 | -5.24 | 1.82 |

**[Table 3]**

| (Unit: mass%) | Example | | | | | | | |
|---|---|---|---|---|---|---|---|---|
| | 17 | 18 | 19 | 20 | 21 | 22 | 23 | 24 |
| P₂O₅ | 26.50 | 25.53 | 25.53 | 24.31 | 24.31 | 24.31 | 24.80 | 24.31 |
| Nb₂O₅ | 36.93 | 33.02 | 36.02 | 34.30 | 34.30 | 39.30 | 45.20 | 39.30 |
| Na₂O | 12.43 | 9.23 | 9.23 | 13.55 | 8.79 | 12.43 | 12.69 | 8.29 |
| K₂O | 3.27 | 2.92 | 2.92 | 2.78 | 7.55 | | | 8.29 |
| BaO | 1.40 | 8.96 | 8.96 | 8.53 | 8.53 | 12.43 | 10.64 | 8.29 |
| TiO₂ | 14.77 | 16.15 | 16.15 | 15.38 | 15.38 | 10.38 | 5.49 | 10.38 |
| SiO₂ | | | | | | | | |
| B₂O₃ | | | | | | | | |
| WO₃ | 4.68 | 4.18 | 1.18 | 1.13 | 1.13 | 1.13 | 1.15 | 1.13 |
| ZnO | | | | | | | | |
| ZrO₂ | | | | | | | | |
| MgO | | | | | | | | |
| CaO | | | | | | | | |
| SrO | | | | | | | | |
| Li₂O | | | | | | | | |
| Al₂O₃ | | | | | | | | |
| Sb₂O₃ | 0.02 | 0.02 | 0.02 | 0.02 | 0.02 | 0.02 | 0.03 | 0.02 |
| Total | 100.00 | 100.00 | 100.00 | 100.00 | 100.00 | 100.00 | 100.00 | 100.00 |
| Na₂O+K₂O | 15.70 | 12.15 | 12.15 | 16.33 | 16.33 | 12.43 | 12.69 | 16.58 |
| Na₂O+K₂O+BaO | 17.10 | 21.11 | 21.11 | 24.86 | 24.86 | 24.86 | 23.33 | 24.87 |
| Nb₂O₅+TiO₂ | 51.70 | 49.16 | 52.16 | 49.68 | 49.68 | 49.68 | 50.69 | 49.67 |
| (Na₂O+K₂O+BaO)/(B₂O₃+TiO₂) | 1.16 | 1.31 | 1.31 | 1.62 | 1.62 | 2.40 | 4.25 | 2.40 |
| RO | 1.40 | 8.96 | 8.96 | 8.53 | 8.53 | 12.43 | 10.64 | 8.29 |
| Refractive index (n_{d}) | 1.85 | 1.87 | 1.88 | 1.83 | 1.84 | 1.85 | 1.83 | 1.84 |
| Abbe number (v_{d}) | 20.56 | 20.52 | 20.35 | 22.02 | 21.59 | 22.26 | 23.52 | 21.60 |
| λ₈₀ [nm] | 427 | 432 | 431 | 430 | 431 | 433 | 432 | 430 |
| λ₇₀ [nm] | 395 | 400 | 399 | 399 | 399 | 400 | 400 | 400 |
| λ₅ [nm] | 368 | 373 | 373 | 373 | 373 | 373 | 373 | 373 |
| α(100-300°C) [×10⁻⁷ °C⁻¹] | 110 | 104 | 105 | 122 | 118 | 112 | 114 | 121 |
| Temperature coefficient of relative refractive index [×10⁻⁶ °C⁻¹] | -1.51 | -0.71 | -0.85 | -3.11 | -2.58 | -1.78 | -2.05 | -2.98 |

**[Table 4]**

| (Unit: mass%) | Example | | | | | | | |
|---|---|---|---|---|---|---|---|---|
| | 25 | 26 | 27 | 28 | 29 | 30 | 31 | 32 |
| P₂O₅ | 24.31 | 24.31 | 24.31 | 24.31 | 24.31 | 24.31 | 24.31 | 23.6 |
| Nb₂O₅ | 39.30 | 39.30 | 39.30 | 39.30 | 39.30 | 37.80 | 38.80 | 38.15 |
| Na₂O | 17.43 | 7.43 | 13.07 | 13.07 | 12.57 | 12.07 | 7.07 | 7.22 |
| K₂O | | | 4.36 | 4.36 | 3.86 | 3.36 | 4.36 | 2.91 |
| BaO | 7.43 | 17.43 | 7.43 | 7.43 | 6.93 | 6.43 | 10.43 | 16.92 |
| TiO₂ | 10.38 | 10.38 | 10.38 | 11.51 | 13.01 | 16.01 | 15.01 | 10.08 |
| SiO₂ | | | | | | | | |
| B₂O₃ | | | | | | | | |
| WO₃ | 1.13 | 1.13 | 1.13 | | | | | 1.09 |
| ZnO | | | | | | | | |
| ZrO₂ | | | | | | | | |
| MgO | | | | | | | | |
| CaO | | | | | | | | |
| SrO | | | | | | | | |
| Li₂O | | | | | | | | |
| Al₂O₃ | | | | | | | | |
| Sb₂O₃ | 0.02 | 0.02 | 0.02 | 0.02 | 0.02 | 0.02 | 0.02 | 0.02 |
| Total | 100.00 | 100.00 | 100.00 | 100.00 | 100.00 | 100.00 | 100.00 | 100.00 |
| Na₂O+K₂O | 17.43 | 7.43 | 17.43 | 17.43 | 16.43 | 15.43 | 11.43 | 10.13 |
| Na₂O+K₂O+BaO | 24.86 | 24.86 | 24.86 | 24.86 | 23.36 | 21.86 | 21.86 | 27.05 |
| Nb₂O₅+TiO₂ | 49.68 | 49.68 | 49.68 | 50.80 | 52.30 | 53.80 | 53.80 | 48.23 |
| (Na₂O+K₂O+BaO)/(B₂O₃+TiO₂) | 2.40 | 2.40 | 2.40 | 2.16 | 1.80 | 1.37 | 1.46 | 2.68 |
| RO | 7.43 | 17.43 | 7.43 | 7.43 | 6.93 | 6.43 | 10.43 | 16.92 |
| Refractive index (n_{d}) | 1.81 | 1.88 | 1.82 | 1.82 | 1.84 | 1.86 | 1.89 | 1.86 |
| Abbe number (ν_{d}) | 23.17 | 21.38 | 22.87 | 22.54 | 21.73 | 20.77 | 20.29 | 22.22 |
| λ₈₀ [nm] | 431 | 435 | 436 | 433 | 435 | 436 | 432 | 435 |
| λ₇₀ [nm] | 400 | 400 | 400 | 400 | 400 | 400 | 400 | 400 |
| λ₅ [nm] | 373 | 373 | 373 | 373 | 373 | 373 | 373 | 373 |
| α(100-300°C) [×10⁻⁷ °C⁻¹] | 131 | 98 | 129 | 129 | 122 | 117 | 102 | 104 |
| Temperature coefficient of relative refractive index [×10⁻⁶ °C⁻¹] | -4.31 | -2.00 | -4.04 | -4.00 | -3.11 | -2.45 | -0.45 | -0.71 |

**[Table 5]**

| (Unit: mass%) | Example | | | | | | | |
|---|---|---|---|---|---|---|---|---|
| | 33 | 34 | 35 | 36 | 37 | 38 | 39 | 40 |
| P₂O₅ | 25.99 | 25.99 | 26.70 | 27.40 | 28.08 | 26.70 | 26.70 | 26.70 |
| Nb₂O₅ | 44.78 | 44.78 | 44.36 | 43.94 | 43.53 | 44.36 | 44.36 | 44.36 |
| Na₂O | 14.45 | 11.46 | 12.50 | 12.38 | 12.27 | 13.93 | 15.36 | 16.79 |
| K₂O | 7.40 | 10.38 | 9.14 | 9.05 | 8.97 | 7.71 | 6.28 | 4.85 |
| BaO | | | | | | | | |
| TiO₂ | 6.86 | 6.86 | 6.79 | 6.73 | 6.67 | 6.79 | 6.79 | 6.79 |
| SiO₂ | 0.50 | 0.50 | 0.48 | 0.47 | 0.47 | 0.48 | 0.48 | 0.48 |
| B₂O₃ | | | | | | | | |
| WO₃ | | | | | | | | |
| ZnO | | | | | | | | |
| ZrO₂ | | | | | | | | |
| MgO | | | | | | | | |
| CaO | | | | | | | | |
| SrO | | | | | | | | |
| Li₂O | | | | | | | | |
| Al₂O₃ | | | | | | | | |
| Sb₂O₃ | 0.02 | 0.02 | 0.02 | 0.02 | 0.02 | 0.02 | 0.02 | 0.02 |
| Total | 100.00 | 100.00 | 100.00 | 100.00 | 100.00 | 100.00 | 100.00 | 100.00 |
| Na₂O+K₂O | 21.84 | 21.84 | 21.64 | 21.43 | 21.23 | 21.64 | 21.64 | 21.64 |
| Na₂O+K₂O+BaO | 21.84 | 21.84 | 21.64 | 21.43 | 21.23 | 21.64 | 21.64 | 21.64 |
| Nb₂O₅+TiO₂ | 51.64 | 51.64 | 51.16 | 50.67 | 50.2 | 51.16 | 51.16 | 51.16 |
| (Na₂O+K₂O+BaO)/(B₂O₃+TiO₂) | 3.19 | 3.19 | 3.19 | 3.19 | 3.19 | 3.19 | 3.19 | 3.19 |
| RO | 0.00 | 0.00 | 0.00 | 0.00 | 0.00 | 0.00 | 0.00 | 0.00 |
| Refractive index (n_{d}) | 1.78 | 1.78 | 1.78 | 1.78 | 1.78 | 1.78 | 1.78 | 1.78 |
| Abbe number (ν_{d}) | 23.89 | 23.74 | 23.61 | 23.74 | 23.81 | 23.76 | 23.8 | 23.94 |
| λ₈₀ [nm] | 429 | 426 | 418 | 417 | 416 | 416 | 418 | 416 |
| λ₇₀ [nm] | 399 | 397 | 394 | 394 | 394 | 394 | 395 | 394 |
| λ₅ [nm] | 368 | 369 | 369 | 369 | 369 | 369 | 369 | 368 |
| α(100-300°C) [×10⁻⁷ °C⁻¹] | 136 | 133 | 132 | 131 | 130 | 135 | 137 | 139 |
| Temperature coefficient of relative refractive index [×10⁻⁶ °C⁻¹] | -4.98 | -4.58 | -4.44 | -4.31 | -4.18 | -4.84 | -5.11 | -5.38 |

**[Table 6]**

| (Unit: mass%) | Example | Comparative Example | Comparative Example |
|---|---|---|---|
| | 41 | A | B |
| P₂O₅ | 27.05 | 30.56 | 42.00 |
| Nb₂O₅ | 44.15 | 60.00 | 27.86 |
| Na₂O | 17.19 | 2.18 | 9.61 |
| K₂O | 4.35 | | 13.27 |
| BaO | | | |
| TiO₂ | 6.76 | 6.76 | 6.76 |
| SiO₂ | 0.48 | 0.48 | 0.48 |
| B₂O₃ | | | |
| WO₃ | | | |
| ZnO | | | |
| ZrO₂ | | | |
| MgO | | | |
| CaO | | | |
| SrO | | | |
| Li₂O | | | |
| Al₂O₃ | | | |
| Sb₂O₃ | 0.02 | 0.02 | 0.02 |
| Total | 100.00 | 100.00 | 100.00 |
| Na₂O+K₂O | 21.54 | 2.18 | 22.88 |
| Na₂O+K₂O+BaO | 21.54 | 2.18 | 22.88 |
| Nb₂O₅+ TiO₂ | 50.91 | 66.76 | 34.62 |
| (Na₂O+K₂O+BaO)/(B₂O₃+TiO₂) | 3.19 | 0.32 | 3.38 |
| RO | 0.00 | 0.00 | 0.00 |
| Refractive index (n_{d}) | 1.78 | Not vitrified | 1.66 |
| Abbe number (v_{d}) | 24.01 | | 30.43 |
| λ₈₀ [nm] | 420 | | 596 |
| λ₇₀ [nm] | 395 | | 408 |
| λ₅ [nm] | 398 | | 370 |
| α(100-300°C) [×10⁻⁷ °C⁻¹] | 137 | | |
| Temperature coefficient of relative refractive index [×10⁻⁶ °C⁻¹] | -5.11 | | |

**[Table 7]**

| (Unit: mass%) | Example | | | | | | | |
|---|---|---|---|---|---|---|---|---|
| | 42 | 43 | 44 | 45 | 46 | 47 | 48 | 49 |
| P₂O₅ | 21.88 | 23.60 | 21.46 | 27.25 | 27.23 | 27.80 | 31.24 | 34.37 |
| Nb₂O₅ | 35.37 | 38.16 | 34.69 | 42.43 | 42.40 | 44.15 | 42.05 | 40.14 |
| Na₂O | 6.69 | 7.22 | 6.56 | 15.51 | 15.51 | 16.44 | 15.65 | 14.94 |
| K₂O | 4.35 | 1.41 | 11.74 | 3.93 | 3.92 | 4.35 | 4.14 | 3.95 |
| BaO | 15.69 | 16.93 | 15.39 | | | | | |
| TiO₂ | 14.99 | 10.08 | 9.16 | 6.10 | 6.10 | 6.76 | 6.44 | 6.15 |
| SiO₂ | | | | | | 0.47 | 0.45 | 0.43 |
| B₂O₃ | | | | | | | | |
| WO₃ | 1.01 | 1.09 | 1.00 | 4.76 | 1.96 | | | |
| ZnO | | | | | | | | |
| ZrO₂ | | | | | | | | |
| MgO | | | | | | | | |
| CaO | | | | | | | | |
| SrO | | | | | | | | |
| Li₂O | | 1.50 | | | | | | |
| Al₂O₃ | | | | | 2.86 | | | |
| Sb₂O₃ | 0.02 | 0.01 | 0.01 | 0.02 | 0.02 | 0.02 | 0.02 | 0.02 |
| Total | 100.00 | 100.00 | 100.00 | 100.00 | 100.00 | 100.00 | 100.00 | 100.00 |
| Na₂O+K₂O | 11.04 | 8.63 | 18.30 | 19.44 | 19.43 | 20.79 | 19.80 | 18.90 |
| Na₂O+K₂O+BaO | 26.73 | 25.56 | 33.69 | 19.44 | 19.43 | 20.79 | 19.80 | 18.90 |
| Nb₂O₅+TiO₂ | 50.36 | 48.24 | 43.85 | 48.53 | 48.50 | 50.91 | 48.49 | 46.29 |
| (Na₂O+K₂O+BaO)/(B₂O₃+TiO₂) | 1.78 | 2.54 | 3.68 | 3.19 | 3.19 | 3.07 | 3.07 | 3.07 |
| RO | 15.69 | 16.93 | 15.39 | 0.00 | 0.00 | 0.00 | 0.00 | 0.00 |
| Refractive index (n_{d}) | 1.89 | 1.87 | 1.77 | 1.78 | 1.76 | 1.78 | 1.76 | 1.74 |
| Abbe number (v_{d}) | 20.86 | 22.21 | 25.49 | 23.95 | 25.64 | 23.87 | 25.06 | 26.00 |
| λ₈₀ [nm] | 435 | 436 | 435 | 440 | 432 | 420 | 431 | 428 |
| λ₇₀ [nm] | 401 | 401 | 400 | 402 | 397 | 395 | 401 | 397 |
| λ₅ [nm] | 386 | 381 | 373 | 372 | 364 | 370 | 371 | 370 |
| α(100-300°C) [×10⁻⁷ °C⁻¹] | 109 | 111 | 142 | 131 | 143 | 130 | 127 | 130 |
| Temperature coefficient of relative refractive index [×10⁻⁶ °C⁻¹] | -1.38 | -1.65 | -5.78 | -4.31 | -5.91 | -4.30 | -3.78 | -4.18 |

**[Table 8]**

| (Unit: mass%) | Example | |
|---|---|---|
| | 50 | 51 |
| P₂O₅ | 31.24 | 36.34 |
| Nb₂O₅ | 45.58 | 27.00 |
| Na₂O | 13.58 | 16.48 |
| K₂O | 3.60 | 5.68 |
| BaO | | |
| TiO₂ | 5.59 | 8.84 |
| SiO₂ | 0.39 | 0.62 |
| B₂O₃ | | |
| WO₃ | | |
| ZnO | | |
| ZrO₂ | | |
| MgO | | |
| CaO | | |
| SrO | | 5.00 |
| L₂O | | |
| Al₂O₃ | | |
| Sb₂O₃ | 0.02 | 0.03 |
| Total | 100.00 | 100.00 |
| Na₂O + K₂O | 17.18 | 22.17 |
| Na₂O+K₂O+BaO | 17.18 | 22.17 |
| Nb₂O₅+ TiO₂ | 51.17 | 35.84 |
| (Na₂O+K₂O+BaO)/(B₂O₃+TiO₂) | 3.07 | 2.51 |
| RO | 0.00 | 5.00 |
| Refractive index (n_{d}) | 1.78 | 1.70 |
| Abbe number (v_{d}) | 24.28 | 28.12 |
| λ₈₀ [nm] | 425 | 422 |
| λ₇₀ [nm] | 399 | 399 |
| λ₅ [nm] | 372 | 369 |
| α (100-300°C) [×10⁻⁷ °C⁻¹] | 116 | 151 |
| Temperature coefficient of relative refractive index [×10⁻⁶ °C⁻¹] | -2.31 | -6.97 |

The optical glass in each of Examples of the present invention contains a P₂O₅ component and a Nb₂O₅ component and also contains a Na₂O component and a K₂O component in a particular amount. Thus, an inexpensive glass having a low temperature coefficient of relative refractive index can be obtained.

As shown in Tables, the optical glass in each of Examples had a temperature coefficient of relative refractive index in a desired range of +1.0 × 10⁻⁶ to -10.0 × 10⁻⁶ (°C⁻¹), more specifically, in a desired range of +3.0 × 10⁻⁶ to -10.0 × 10⁻⁶ (°C⁻¹).

The optical glass in each of Examples had a refractive index (n_{d}) in a desired range of 1.65 or more. The optical glass in each of Examples of the present invention had an Abbe number (ν_{d}) in a desired range of 10 or more and 35 or less.

The optical glass in each of Examples had an average linear thermal expansion coefficient (100°C-300°C) of 80 (10⁻⁷ °C⁻¹) or more.

The optical glass in each of Examples had a transmittance (λ₈₀) of 460 nm or less, a transmittance (λ₇₀) of 430 nm or less, and a transmittance (λ₅) of 400 nm or less.

The optical glass in each of Examples was a stable glass, and devitrification did not readily occur during production of the glass. In contrast, the glass in Comparative Example A failed to vitrify because devitrification occurred.

Accordingly, it was found that the optical glass in each of Examples had a desired refractive index (n_{d}), a desired Abbe number (v_{d}), and a low temperature coefficient of relative refractive index and was produced from low-cost materials. Thus, the optical glass in each of Examples of the present invention probably contributes to downsizing of an optical system such as an onboard optical apparatus or a projector used in a high-temperature environment and to correction of, for example, image formation misalignment due to temperature change.

Furthermore, a glass block was produced using the optical glass in each of Examples of the present invention, and the glass block was ground and polished into a lens and a prism. As a result, various lenses and prisms could be stably produced.

The present invention has been described in detail for illustrative purposes. Since Examples are merely illustrative, it should be understood that many modifications can be made by those skilled in the art without departing from the spirit and scope of the present invention.

## Claims

1. An optical glass comprising, on a mass% basis:
20.0% to 40.0% of a P₂O₅ component;
25.0% to 50.0% of a Nb₂O₅ component; and
3.0% to 30.0% of a total mass (Na₂O + K₂O),
wherein a temperature coefficient (40°C to 60°C) of a relative refractive index (589.29 nm) is in the range of +3.0 × 10⁻⁶ to -10.0 × 10⁻⁶ (°C⁻¹).

2. The optical glass according to Claim 1, comprising 10.0% to 35.0% of a total mass (Na₂O + K₂O + BaO) .

3. The optical glass according to Claim 1 or 2, wherein an average linear thermal expansion coefficient α at 100°C to 300°C is 80 (10⁻⁷ °C⁻¹) or more.

4. The optical glass according to any one of Claims 1 to 3, having a refractive index (n_{d}) of 1.65 or more and 2.00 or less and an Abbe number (ν_{d}) of 10 or more and 35 or less.

5. A preform formed of the optical glass according to any one of Claims 1 to 4.

6. An optical element formed of the optical glass according to any one of Claims 1 to 4.

7. An optical apparatus comprising the optical element according to Claim 6.
